# FASCICULE DE BREVET EUROPEEN

(11) **EP 2 614 104 B1**
(45) Date de publication et mention de la délivrance du brevet: **23.04.2014**
(21) Numéro de dépôt: 11773483.0
(22) Date de dépôt: 02.09.2011
(51) Int. Cl.: C08G 69/36, C08L 77/06, C08L 77/02

(54) **COPOLYAMIDES**
COPOLYAMIDE
COPOLYAMIDES

(30) Priorité: 06.09.2010 FR 1057067; 06.09.2010 FR 1057053
(43) Date de publication de la demande: 17.07.2013
(73) Titulaire: Arkema France, 92700 Colombes (FR); Institut National des Sciences Appliquées de Lyon, 69621 Villeurbanne (FR)
(72) Inventeur: BRIFFAUD, Thierry, F-27300 Caorches Saint Nicolas (FR); PINEAU, Quentin, F-27000 Evreux (FR); GONCALVES, Emilie, 75012 Paris (FR); DUPUY, Jérôme, F-69140 Rillieux Le Pape (FR); ROUSSEAU, Alain, F-69800 Saint Priest (FR)
(74) Mandataire: Lhoste, Catherine
(86) Numéro de dépôt international: PCT/FR2011/052011
(87) Numéro de publication internationale: WO 2012/032249

(56) Documents cités:
- WO-A1-2010/015785
- FR-A1- 2 934 862

## Description

La présente invention se rapporte à des copolyamides semi-aromatiques présentant, entre autres, un point de fusion élevé et de très bonnes propriétés thermomécaniques et de souplesse, ainsi qu'à leur procédé de préparation et une composition les comprenant.

Les copolyamides semi-aromatiques sont des polyamides comprenant au moins deux motifs distincts et dont au moins un des dits motifs comprend un cycle aromatique issu d'un précurseur aromatique, qui peut notamment être une diamine aromatique ou un acide dicarboxylique aromatique.

Parmi ces copolyamides semi-aromatiques, ceux comprenant un motif X.T issu de la polycondensation d'une diamine aliphatique comprenant x atomes de carbone (et notée X) et de l'acide téréphtalique (noté T) sont connus depuis un peu plus de quinze ans pour leur haut point de fusion, pour leurs très bonnes propriétés mécaniques, chimiques et pour leur faisabilité par polycondensation en réacteur pressurisé. A titre d'illustration, on peut notamment citer les copolyamides décrits dans le document EP 0 550 314.

Le document WO 2010/015785 décrit un copolyamide comprenant les motifs suivants :
- l'acide téréphtalique,
- une diamine X comprenant entre 9 et 36 atomes de carbone,
- un motif A obtenu à partir d'un lactame, d'une diamine Ca et d'un diacide Cb ou d'un aminoacide.

Le document FR 2 934 862 décrit un copolyamide dont la composition est identique à celle énoncée ci-dessus (WO 2010/015785).

Pour améliorer certaines des propriétés de tels copolyamides, en particulier leur souplesse, que l'on caractérise par une mesure du module en flexion ou en traction, leur ductilité, que l'on caractérise par des mesures d'allongement à la rupture, ainsi que leur ténacité, que l'on caractérise par des mesures de résistance au choc, entaillé ou non, le document US 2006/0235190 propose des copolyamides qui proviennent des précurseurs suivants :
- l'acide téréphtalique,
- au moins une diamine aliphatique linéaire de formule H₂N-(CH₂)ₓ-NH₂, x étant un nombre entier compris entre 4 et 18,
- au moins un acide gras dimérisé comprenant jusqu'à 44 atomes de carbone, et, si nécessaire,
- d'autres acides dicarboxyliques aromatiques, acides dicarboxyliques aliphatiques et lactames ou acides aminocarboxyliques.

Parmi les copolyamides décrits dans ce document US 2006/0235190, les copolyamides 6.T/6.I/6.36, 6.T/6.6/6.36 et 6.T/12/6.36 (notés 1 à 3) ont été exemplifiés et comparés aux copolyamides comparatifs 6.T/6.I, 6.T/6.6 et 6.T/12 (notés comp.1 à comp.3).

Ces copolyamides 1 à 3 ont en commun, en plus du motif 6.T qui provient de la réaction de l'hexaméthylènediamine et de l'acide téréphtalique, le motif 6.36 qui provient quant-à-lui de la réaction de l'hexaméthylènediamine avec un acide gras dimérisé comprenant 36 atomes de carbone et disponible sous la dénomination commerciale Pripol^{®}1012.

En référence au tableau 3 du document US 2006/0235190, on constate que l'introduction de ce motif 6.36 permet d'obtenir des copolyamides (copolyamides 1 à 3) ayant des propriétés d'allongement, donc de ductilité, et de ténacité améliorées par rapport aux copolyamides comparatifs 1 à 3 obtenus à partir des mêmes précurseurs, mais en l'absence du dimère d'acide gras comprenant 36 atomes de carbone.

Compte tenu de ces observations, on serait donc tenté d'augmenter la proportion d'acide gras dimérisé par rapport à celles des autres précurseurs pour obtenir un copolyamide présentant une ductilité et une ténacité simultanément améliorées.

Toutefois, on a constaté que lorsque l'on augmente la proportion d'acide gras dimérisé comprenant 36 atomes de carbone par rapport à celles des autres précurseurs, la réaction de polycondensation pour l'obtention du copolyamide correspondant devient difficile, voire impossible. En effet, on observe, à l'oeil nu, la formation de points blancs dans la masse réactionnelle. La présence de ces points blancs croît avec la teneur en acide gras dimérisé jusqu'à obtenir un mélange multiphasique ne permettant plus la synthèse du copolyamide attendu.

Le choix d'un précurseur tel qu'un acide gras dimérisé comprenant 36 atomes de carbone limite donc la possibilité d'obtenir un copolyamide présentant une ductilité et une ténacité simultanément améliorées.

De surcroît, et comme mentionné dans le document US 2006/0235190, les acides gras dimérisés disponibles dans le commerce sont des composés qui se présentent sous la forme d'un mélange de plusieurs composés oligomères, principalement des dimères (obtenus par réaction de 2 molécules d'acides gras), qui peuvent être saturés ou insaturés, mais également des monomères résiduels et des trimères (obtenus par réaction de 3 molécules d'acides gras). Dans le document US 2006/0235190, les précurseurs du type acides gras dimérisés doivent comprendre au plus 3% en poids de trimères.

La pureté de ces mélanges d'acides gras dimérisés est un critère essentiel pour l'obtention de copolyamides présentant les propriétés recherchées. En effet, pour avoir la meilleure reproductibilité lors de la réaction de polycondensation, il faut disposer d'un acide gras dimérisé le plus pur possible, c'est-à-dire comportant le moins de composés insaturés, de monomères et de trimères, car la présence de tels composés a notamment une incidence directe sur les propriétés ainsi que sur la couleur et la stabilité thermique du copolyamide final. Il devient alors effectivement nécessaire d'adapter les teneurs respectives des autres monomères précurseurs pour obtenir les propriétés thermomécaniques recherchées pour le copolyamide. Il y a donc un réel souci de reproductibilité de la réaction de polycondensation pour l'obtention du copolyamide attendu à partir des différents précurseurs, lorsque l'un de ceux-ci est constitué par un acide gras dimérisé.

Pour améliorer cette reproductibilité, et donc la faisabilité industrielle de tels copolyamides semi-aromatiques souples, il est alors nécessaire de faire le choix d'un acide gras dimérisé de très haute pureté, ce qui n'est pas sans conséquence sur le coût de l'obtention du copolyamide final.

Le but de la présente invention est donc de remédier à l'ensemble des inconvénients précités et de proposer un copolyamide qui présente un point de fusion supérieur ou égal à 200°C, avantageusement compris entre 240°C et 330°C (mesurée par DSC), des propriétés mécaniques comparables à celles des copolyamides de l'art antérieur et notamment des copolyamides décrits dans les documents EP 0 550 314 et US 2006/0235190 cités plus haut, ainsi que des propriétés de souplesse améliorées par rapport à celles des copolyamides décrits dans le document EP 0 550 314, le procédé de préparation de tels copolyamides semi-aromatiques souples n'étant pas limité par le degré de pureté et par la teneur en un précurseur du type acide gras dimérisé comme dans le document US 2006/0235190.

La présente invention se rapporte donc à un copolyamide comprenant les motifs issus de la réaction de polycondensation des précurseurs suivants :
- l'acide téréphtalique (a),
- une diamine aliphatique (b), de préférence linéaire, comprenant x atomes de carbone, x étant un nombre entier compris entre 6 et 22, et
- un acide amino-carboxylique et/ou un lactame (c).

Selon l'invention, cet acide amino-carboxylique et/ou ce lactame (c) comprend une chaîne principale et au moins une ramification alkyle, qui peut être linéaire ou ramifiée, le nombre total d'atomes de carbone de cet acide amino-carboxylique et/ou de ce lactame (c) étant compris entre 12 et 36. Avantageusement, le nombre minimal d'atomes de carbone de cet acide amino-carboxylique et/ou de ce lactame (c) est strictement supérieur à 12.

Le choix d'un amino-carboxylique et/ou d'un lactame, et non d'un acide gras dimérisé comprenant 36 atomes de carbone destiné à réagir avec la diamine aliphatique comme dans le document US 2006/0235190, permet d'avoir une source de précurseur qui est fiable et non dépendante du degré de pureté disponible commercialement.

Accessoirement, ce choix peut également permettre de diminuer le nombre de précurseurs nécessaires à la formation d'un des motifs du copolyamide semi-aromatique.

En outre, le fait que cet acide amino-carboxylique et/ou lactame (c) présente au moins une ramification alkyle permet une meilleure compatibilité avec les autres précurseurs que sont l'acide téréphtalique et la diamine. En effet, on observe que lors de la réaction de polycondensation de ces trois précurseurs (a), (b) et (c), la diamine (b) étant l'hexanediamine, il ne se forme aucun point blanc et ce, quelle que soit la proportion de cet acide amino-carboxylique et/ou lactame (c).

Comme indiqué précédemment, l'acide amino-carboxylique et/ou le lactame (c) est formé d'une chaîne principale et d'au moins une ramification alkyle. Le nombre total d'atomes de carbone du précurseur (c), qui correspond donc à la somme du nombre d'atomes de carbone de la chaîne principale et du nombre d'atomes de la ou des ramifications, est compris entre 12 et 36, avantageusement entre 15 et 30 et, préférentiellement, entre 18 et 24.

Il est précisé ici que, sauf indication contraire, l'expression "compris(e) entre" qui vient d'être mentionnée dans le paragraphe précédent et qui sera également utilisée dans la suite de la présente description doit s'entendre comme incluant les bornes citées.

La chaîne principale de l'acide amino-carboxylique et/ou du lactame (c) comprend avantageusement entre 6 et 18 atomes de carbone et, préférentiellement, entre 10 et 12 atomes de carbone.

A titre d'exemples, la chaîne principale peut être formée par un acide aminodécanoïque, par un acide aminoundécanoïque ou encore par un acide aminododécanoïque.

La(les) ramification(s) alkyle(s) de l'acide amino-carboxylique et/ou du lactame (c) peut(vent) être linéaire(s) et répondre à la formule CₓH₂ₓ₋₁, avec x étant un nombre entier supérieur ou égal à 1.

Elle(s) peut(vent) également être ramifiée(s).

On peut également tout à fait envisager que la chaîne principale du précurseur (c) comprenne au moins une ramification alkyle linéaire et au moins une ramification alkyle, cette dernière étant elle-même ramifiée.

Avantageusement, cette(ces) ramification(s) comprend(ennent) au moins 5 atomes de carbone, avantageusement au moins 6 atomes de carbone et, préférentiellement, au moins 7 atomes de carbone.

A titre d'exemples, la ramification alkyle peut être une chaîne n-pentyle, n-hexyle, n-heptyle, n-octyle, n-nonyle, n-décyle, n-undécyle, n-docécyle ou encore n-octadécyle.

Il est précisé que la ou les ramifications alkyles peuvent être reliées à la chaîne principale, soit au niveau d'un atome de carbone, soit au niveau de l'atome d'azote.

On peut très avantageusement mettre en oeuvre, comme précurseur (c), l'acide N-heptyl-amino-11-undécanoïque que l'on notera 18, car il comprend 18 atomes de carbone au total dont 11 sur la chaîne principale et 7 sur la ramification n-heptyle. D'autres précurseurs (c) avantageux sont l'acide N-heptyl-amino-12-dodécanoïque (noté 19), l'acide N-dodécyl-amino-11-undécanoïque (noté 23), l'acide N-dodécyl-amino-12-dodécanoïque (noté 24), l'acide N-octadécyl-amino-11-undécanoïque (noté 29) et l'acide N-octadécyl-amino-12-dodécanoïque (noté 30).

Il est précisé que, dans la présente description, les abréviations 18, 19, 23, 24, 29 et 30 utilisées dans les copolyamides explicitement cités correspondent au motif issu du précurseur (c) et, en aucun cas, à celui qui serait issu du précurseur (d).

La diamine aliphatique (b), quant-à-elle, comprend x atomes de carbone, x étant un nombre entier compris entre 6 et 22. Elle peut être linéaire ou ramifiée.

Lorsque la diamine aliphatique (b) est ramifiée, elle est formée d'une chaîne principale et d'au moins une ramification alkyle, cette ramification alkyle pouvant être elle-même linéaire ou ramifiée.

De préférence, la diamine (b) est aliphatique et linéaire. Elle peut ainsi être notamment choisie parmi l'hexanediamine (qui est également dénommée hexaméthylènediamine), l'heptanediamine, l'octanediamine, la nonanediamine, la décanediamine, l'undécanediamine, la dodécanediamine, la tridécanediamine, la tétradécanediamine, l'hexadécanediamine, l'octadécanediamine, l'octadécènediamine, l'eicosanediamine et la docosanediamine. De telles diamines présentent toutes l'avantage de pouvoir être bioressourcées et comporter du carbone organique issu de la biomasse, qui pourra être déterminé selon la norme ASTM D6866.

Préférentiellement, la diamine aliphatique (b) est l'hexaméthylènediamine (ou hexanediamine) ou la décanediamine.

Selon une première version de l'invention, la réaction de polycondensation peut n'être mise en oeuvre qu'avec les précurseurs (a), (b) et (c) mentionnés ci-dessus. On obtient alors un copolyamide qui n'est constitué que de deux motifs distincts, le motif X.T et le motif issu du précurseur (c).

Un tel copolyamide peut comprendre :
- entre 35 et 85%, avantageusement entre 45 et 80%, préférentiellement entre 50 et 75%, en moles d'acide téréphtalique (a),
- entre 15 et 65%, avantageusement entre 20 et 55%, préférentiellement entre 25 et 50%, en moles d'acide aminocarboxylique et/ou de lactame (c), et
- entre 35 et 85%, avantageusement entre 45 et 80%, préférentiellement entre 50 et 75%, en moles de diamine aliphatique (b). Autrement dit, la teneur molaire en précurseur (b) est égale à la teneur molaire en précurseur (a).

Parmi ces copolyamides qui ne sont constitués que de deux motifs distincts, on citera tout particulièrement :
- le copolyamide 18/6.T, issu de la réaction de polycondensation de l'acide téréphtalique, de l'hexaméthylènediamine et de l'acide N-heptyl-amino-11-undécanoïque,
- le copolyamide 18/10.T, issu de la réaction de polycondensation de l'acide téréphtalique, de la décanediamine et de l'acide N-heptyl-amino-11-undécanoïque,
- le copolyamide 19/6.T, issu de la réaction de polycondensation de l'acide téréphtalique, de l'hexaméthylènediamine et de l'acide N-heptyl-amino-12-dodécanoïque, et
- le copolyamide 19/10.T, issu de la réaction de polycondensation de l'acide téréphtalique, de la décanediamine et de l'acide N-heptyl-amino-12-dodécanoïque.

De la même manière, on pourrait encore citer les copolyamides 23/6.T, 23/10.T, 24/6.T, 24/10.T, 29/6.T, 29/10.T, 30/6.T et 30/10.T.

Selon une deuxième version de l'invention, la réaction de polycondensation peut être également mise en oeuvre avec les précurseurs (a), (b) et (c) en présence de l'un au moins des autres précurseurs suivants :
- un acide amino-carboxylique et/ou un lactame (d) distinct de (c),
- un acide dicarboxylique (e) distinct de l'acide téréphtalique (a),
- une diamine (f) distincte de la diamine aliphatique (b).

Le précurseur (d) peut être un acide amino-carboxylique ou un lactame, nécessairement distinct de l'acide aminocarboxylique ou du lactame (c).

Avantageusement, le précurseur (d) comprend un nombre d'atomes de carbone inférieur ou égal à 12.

L'acide aminocarboxylique (d) peut par exemple être choisi parmi l'acide amino-9-nonanoïque (noté 9), l'acide amino-10-décanoïque (noté 10), l'acide amino-11-undécanoïque (noté 11) et l'acide amino-12-dodécanoïque (noté 12). On utilisera de préférence l'acide amino-11-undécanoïque qui présente l'avantage d'être bioressourcé puisqu'il comporte du carbone organique issu de la biomasse et déterminé selon la norme ASTM D6866.

Le lactame (d) peut notamment être choisi parmi le caprolactame (noté 6), le décanolactame (noté 10), l'undécanolactame (noté 11) et le lauryllactame (noté 12). On utilisera de préférence le lauryllactame.

Un copolyamide obtenu à partir des précurseurs (a), (b), (c) et (d) peut ainsi comprendre :
- entre 35 et 85%, avantageusement entre 45 et 80%, préférentiellement entre 50 et 75% en moles d'acide téréphtalique (a),
- entre 15 et 65%, avantageusement entre 20 et 55%, préférentiellement entre 25 et 50%, en moles d'acide aminocarboxylique et/ou de lactame (c) et d'acide aminocarboxylique et/ou de lactame (d), et
- entre 35 et 85%, avantageusement entre 45 et 80%, préférentiellement entre 50 et 75%, en moles de diamine aliphatique (b), les teneurs molaires en précurseurs (a) et (b) étant identiques.

Parmi ces copolyamides obtenus à partir des précurseurs (a), (b), (c) et (d), on citera tout particulièrement :
- le copolyamide 11/18/6.T issu de la réaction de polycondensation de l'acide téréphtalique, de l'hexaméthylènediamine, de l'acide N-heptyl-amino-11-undécanoïque et de l'acide amino-11-undécanoïque ou, éventuellement, de l'undécanolactame,
- le copolyamide 11/18/10.T issu de la réaction de polycondensation de l'acide téréphtalique, de la décanediamine, de l'acide N-heptyl-amino-11-undécanoïque et de l'acide amino-11-undécanoïque ou, éventuellement, de l'undécanolactame,
- le copolyamide 12/18/6.T, issu de la réaction de polycondensation de l'acide téréphtalique, de l'hexaméthylènediamine, de l'acide N-heptyl-amino-11-undécanoïque et du lauryllactame ou, éventuellement, de l'acide amino-12-dodécanoïque,
- le copolyamide 12/18/10.T, issu de la réaction de polycondensation de l'acide téréphtalique, de la décanediamine, de l'acide N-heptyl-amino-11-undécanoïque et du lauryllactame ou, éventuellement, de l'acide amino-12-dodécanoïque,
- le copolyamide 11/23/6.T, issu de la réaction de polycondensation de l'acide téréphtalique, de l'hexaméthylènediamine, de l'acide N-dodécyl-amino-11-undécanoïque et de l'acide amino-11-undécanoïque ou, éventuellement, de l'undécanolactame,
- le copolyamide 11/23/10.T, issu de la réaction de polycondensation de l'acide téréphtalique, de la décanediamine, de l'acide N-dodécyl-amino-11-undécanoïque et de l'acide amino-11-undécanoïque ou, éventuellement, de l'undécanolactame,
- le copolyamide 12/23/6.T, issu de la réaction de polycondensation de l'acide téréphtalique, de l'hexaméthylènediamine, de l'acide N-dodécyl-amino-11-undécanoïque et du lauryllactame ou, éventuellement, de l'acide amino-12-dodécanoïque, et
- le copolyamide 12/23/10.T, issu de la réaction de polycondensation de l'acide téréphtalique, de la décanediamine, de l'acide N-dodécyl-amino-11-undécanoïque et du lauryllactame ou, éventuellement, de l'acide amino-12-dodécanoïque.

De la même manière, on pourrait encore citer les copolyamides 11/19/6.T, 11/19/10.T, 12/19/6.T, 12/19/10.T, 11/24/6.T, 11/24/10.T, 12/24/6.T, 12/24/10.T, 11/29/6.T, 11/29/10.T, 12/29/6.T, 12/29/10.T, 11/30/6.T 11/30/10.T, 12/30/6.T et 12/30/10.T.

Le précurseur (e) est un acide dicarboxylique nécessairement distinct de l'acide téréphtalique (a). Cet acide dicarboxylique (e) comprend avantageusement entre 4 et 36 atomes de carbone.

L'acide dicarboxylique (e) peut être un acide dicarboxylique aliphatique, linéaire ou ramifié, un acide dicarboxylique cycloaliphatique ou encore un acide dicarboxylique aromatique.

Lorsque l'acide dicarboxylique (e) est aliphatique et linéaire, il peut être choisi parmi l'acide succinique, l'acide pentanedioïque, l'acide adipique, l'acide heptanedioïque, l'acide octanedioïque, l'acide azélaïque, l'acide sébacique, l'acide undécanedioïque, l'acide dodécanedioïque, l'acide brassylique, l'acide tétradécanedioïque, l'acide hexadécanedioïque, l'acide octadécanedioïque, l'acide octadécènedioïque, l'acide eicosanedioïque, l'acide docosanedioïque et les acides gras dimérisés contenant 36 atomes de carbone. De tels acides gras dimérisés sont notamment disponibles sous la dénomination commerciale Pripol^{®}.

Les acides aliphatiques qui viennent d'être cités peuvent comprendre au moins une ramification alkyle pour constituer l'acide dicarboxylique (e) qui correspond alors à un acide carboxylique aliphatique et ramifié. Une telle ramification alkyle peut être linéaire ou ramifiée, comme on l'a vu ci-dessus pour la ramification alkyle de l'acide amino-carboxylique et/ou du lactame (c). L'acide carboxylique aliphatique et ramifié (e) peut également comprendre au moins une ramification alkyle linéaire et au moins une ramification alkyle ramifiée.

Lorsque l'acide dicarboxylique (e) est cycloaliphatique, il peut comporter les squelettes carbonés tels que le cyclohexane, le norbornylméthane, le cyclohexylméthane, le dicyclohexylméthane, le dicyclohexylpropane et le di(methylcyclohexyl)propane.

Lorsque l'acide dicarboxylique (e) est aromatique, il est choisi parmi l'acide isophtalique (noté I) et les diacides naphtaléniques.

De préférence, on choisit des acides aliphatiques, linéaires ou ramifiés, qui permettent d'optimiser la ductilité du copolyamide final.

Un copolyamide obtenu à partir des précurseurs (a), (b), (c) et (e) peut ainsi comprendre :
- entre 35 et 85%, avantageusement entre 45 et 80%, préférentiellement entre 50 et 75%, en moles d'acide téréphtalique (a),
- entre 15 et 65%, avantageusement entre 20 et 55%, préférentiellement entre 25 et 50%, en moles d'acide aminocarboxylique et/ou de lactame (c) et d'acide dicarboxylique (e),
- la teneur molaire en diamine aliphatique (b) étant, quant-à-elle, égale à la somme des teneurs molaires en acide téréphtalique (a) et en acide dicarboxylique (e).

De préférence, lorsque l'acide dicarboxylique (e) est un acide gras dimérisé, la proportion molaire en acide dicarboxylique (e) n'excédera pas 40% de l'ensemble des précurseurs (c) et (e) et ce, afin de limiter l'incidence du degré de pureté d'un tel précurseur sur les propriétés de copolyamide final.

En particulier, cette limitation de la proportion molaire en acide gras dimérisé (e) à 40% de l'ensemble des précurseurs (c) et (e) permet en particulier d'éviter la formation des points blancs observés lors de la synthèse des copolyamides à partir d'acides gras dimérisés tels que décrits dans le document US 2006/0235190. De tels points blancs, qui correspondent à des hétérogénéités de très haut point de fusion (environ 360°C) riches en sel d'acide téréphtalique et d'hexaméthylènediamine traduisent la mauvaise compatibilité entre les acides gras dimérisés et les autres précurseurs que sont notamment l'hexaméthylènediamine et l'acide téréphtalique.

Parmi ces copolyamides obtenus à partir des précurseurs (a), (b), (c) et (e), on citera tout particulièrement les copolyamides 6.10/18/6.T, 6.12/18/6.T, 6.18/18/6.T, 6.36/18/6.T, 6.10/19/6.T, 6.12/19/6.T, 6.18/19/6.T, 6.36/19/6.T, 6.10/23/6.T, 6.12/23/6.T, 6.18/23/6.T, 6.36/23/6.T, 6.10/24/6.T, 6.12/24/6.T, 6.18/24/6.T, 6.36/24/6.T, 6.10/29/6.T, 6.12/29/6.T, 6.18/29/6.T, 6.36/29/6.T, 6.10/30/6.T, 6.12/30/6.T, 6.18/30/6.T, 6.36/30/6.T, 10.10/18/10.T, 10.12/18/10.T, 10.18/18/10.T, 10.36/18/10.T, 10.10/19/10.T, 10.12/19/10.T, 10.18/19/10.T, 10.36/19/10.T, 10.10/23/10.T, 10.12/23/10.T, 10.18/23/10.T, 10.36/23/10.T, 10.10/24/10.T, 10.12/24/10.T, 10.18/24/10.T, 10.36/24/10.T, 10.10/29/10.T, 10.12/29/10.T, 10.18/29/10.T, 10.36/30/10.T, 10.10/30/10.T, 10.12/30/10.T, 10.18/30/10.T et 10.36/30/10.T.

On peut également envisager un copolyamide obtenu à partir de l'ensemble des précurseurs (a), (b), (c), (d) et (e), dans les proportions suivantes :
- entre 35 et 85%, avantageusement entre 45 et 80%, préférentiellement entre 50 et 75%, en moles d'acide téréphtalique (a),
- entre 15 et 65%, avantageusement entre 20 et 55%, préférentiellement entre 25 et 50%, en moles d'acide aminocarboxylique et/ou de lactame (c), d'acide aminocarboxylique et/ou de lactame (d) et d'acide dicarboxylique (e),
- la teneur molaire en diamine aliphatique (b) étant égale à la somme des teneurs molaires en acide téréphtalique (a) et en acide dicarboxylique (e).

De préférence, et pour les raisons indiquées ci-avant, lorsque l'acide dicarboxylique (e) est un acide gras dimérisé, la proportion molaire en acide dicarboxylique (e) n'excédera pas 40% de l'ensemble des précurseurs (c), (d) et (e).

Parmi ces copolyamides obtenus à partir des précurseurs (a), (b), (c), (d) et (e), on citera tout particulièrement les copolyamides 11/6.10/18/6.T, 11/6.12/18/6.T, 11/6.18/18/6.T, 11/6.36/18/6.T, 11/6.10/23/6.T, 11/6.12/23/6.T, 11/6.18/23/6.T, 11/6.36/23/6.T, 12/6.10/18/6.T, 12/6.12/18/6.T, 12/6.18/18/6.T, 12/6.36/18/6.T, 12/6.10/23/6.T, 12/6.12/23/6.T, 12/6.18/23/6.T, 12/6.36/23/6.T, 11/10.10/18/10.T, 11/10.12/18/10.T, 11/10.18/18/10.T, 11/10.36/18/10.T, 11/10.10/23/10.T, 11/10.12/23/10.T, 11/10.18/23/10.T, 11/10.36/23/10.T, 12/10.10/18/10.T, 12/10.12/18/10.T, 12/10.18/18/10.T, 12/10.36/18/10.T, 12/10.10/23/10.T, 12/10.12/23/10.T, 12/10.18/23/10.T et 12/10.36/23/10.T. La présente liste peut bien évidemment être complétée par les copolyamides dans lesquels le motif 18 issu de l'acide N-heptyl-amino-11-undécanoïque ou le motif 23 issu de l'acide N-dodécyl-amino-11-undécanoïque, est remplacé par l'un des motifs 19, 24, 29 et 30, respectivement issus de l'acide N-heptyl-amino-12-dodécanoïque, de l'acide N-dodécyl-amino-12-dodécanoïque, de l'acide N-octadécyl-amino-11-undécanoïque et de l'acide N-octadécyl-amino-12-dodécanoïque.

Le précurseur (f) est une diamine nécessairement distincte de la diamine aliphatique. Cette diamine (f) comprend avantageusement entre 4 et 36 atomes de carbone.

La diamine (f) peut être une diamine aliphatique, linéaire ou ramifiée, une diamine cycloaliphatique ou encore une diamine alkylaromatique.

Lorsque la diamine (f) est aliphatique et linéaire, elle est avantageusement choisie parmi la butanediamine, la pentanediamine, l'hexanediamine, l'heptanediamine, l'octanediamine, la nonanediamine, la décanediamine, l'undécanediamine, la dodécanediamine, la tridécanediamine, la tétradécanediamine, l'hexadécanediamine, l'octadécanediamine, l'octadécènediamine, l'eicosanediamine, la docosanediamine et les diamines comprenant 36 atomes de carbone obtenues à partir d'acides gras dimérisés. De telles diamines obtenues à partir d'acides gras dimérisés sont notamment disponibles sous la dénomination commerciale Priamine^{®}.

Lorsque la diamine (f) est aliphatique et ramifiée, elle peut comporter un ou plusieurs substituants méthyle ou éthyle sur la chaîne principale. Par exemple, la diamine (f) peut avantageusement être choisie parmi la 2,2,4-triméthyl-1,6-hexanediamine, la 2,4,4-triméthyl-1,6-hexanediamine, le 1,3-diaminopentane, la 2-méthyl-1,5-pentanediamine et la 2-méthyl-1,8-octanediamine.

Lorsque la diamine (f) est cycloaliphatique, elle peut être choisie parmi l'isophorone diamine, la bis(3,5-dialkyl-4-aminocyclohexyl)méthane, la bis(3,5-dialkyl-4-aminocyclo-hexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-méthane (PACM) et l'isopropylidènedi(cyclo-hexylamine) (PACP). Cette diamine (f) peut également comporter les squelettes carbonés tels que ceux cités ci-avant pour l'acide dicarboxylique (e), lorsque ce dernier est cycloaliphatique.

Lorsque la diamine (f) est alkylaromatique, elle peut être choisie parmi la 1,3-xylylènediamine et la 1,4-xylylènediamine.

On peut ainsi envisager un copolyamide obtenu à partir de l'ensemble des précurseurs (a), (b), (c), (d), (e) et (f), dans les proportions avantageuses suivantes :
- entre 35 et 85%, avantageusement entre 45 et 80%, préférentiellement entre 50 et 75%, en moles d'acide téréphtalique (a),
- entre 15 et 65%, avantageusement entre 20 et 55%, préférentiellement entre 25 et 50%, en moles d'acide aminocarboxylique et/ou de lactame (c), d'acide aminocarboxylique et/ou de lactame (d), d'acide dicarboxylique (e) et de diamine (f),
- la teneur molaire en diamine aliphatique (b) étant supérieure ou égale à la teneur molaire en acide téréphtalique (a) et la somme des teneurs molaires en diamine aliphatique (b) et en diamine (f) étant égale à la somme des teneurs molaires en acide téréphtalique (a) et en acide dicarboxylique (e).

Parmi ces copolyamides obtenus à partir des précurseurs (a), (b), (c), (d), (e) et (f), on citera tout particulièrement les copolyamides 10.36/18/6.T, 12.36/18/6.T, 36.36/18/6.T, 10.36/23/6.T, 12.36/23/6.T, 36.36/23/6.T, 11/10.36/18/6.T, 11/12.36/18/6.T, 11/36.36/18/6.T, 11/10.36/23/6.T, 11/12.36/23/6.T, 11/36.36/23/6.T 12/10.36/18/6.T, 12/12.36/18/6.T, 12/36.36/18/6.T, 12/10.36/23/6.T, 12/12.36/23/6.T, 12/36.36/23/6.T, 6.36/18/10.T, 12.36/18/10.T, 36.36/18/10.T, 6.36/23/10.T, 12.36/23/10.T, 36.36/23/10.T, 11/6.36/18/10.T, 11/12.36/18/10.T, 11/36.36/18/10.T, 11/6.36/23/10.T, 11/12.36/23/10.T, 11/36.36/23/10.T, 12/6.36/18/10.T, 12/12.36/18/10.T, 12/36.36/18/10.T, 12/6.36/23/10.T, 12/12.36/23/10.T et 12/36.36/23/10.T. Comme précédemment, la présente liste peut bien évidemment être complétée par les copolyamides dans lesquels le motif 18 issu de l'acide N-heptyl-amino-11-undécanoïque ou le motif 23 issu de l'acide N-dodécyl-amino-11-undécanoïque, est remplacé par l'un des motifs 19, 24, 29 et 30, respectivement issus de l'acide N-heptyl-amino-12-dodécanoïque, de l'acide N-dodécyl-amino-12-dodécanoïque, de l'acide N-octadécyl-amino-11-undécanoïque et de l'acide N-octadécyl-amino-12-dodécanoïque.

La présente invention se rapporte également à un procédé de préparation des copolyamides semi-aromatiques tels que définis ci-dessus.

Ce procédé comprend une étape de polycondensation des précurseurs déjà détaillés dans la présente description, à savoir :
- l'acide téréphtalique (a),
- la diamine aliphatique (b), et
- un acide amino-carboxylique et/ou un lactame (c) comprenant une chaîne principale et au moins une ramification alkyle linéaire ou ramifiée, le nombre total d'atomes de carbone de l'acide amino-carboxylique et/ou du lactame (c) étant compris entre 12 et 36,
   de manière optionnelle,
- un acide amino-carboxylique et/ou un lactame (d) distinct de (c),
- un acide dicarboxylique (e) distinct de l'acide téréphtalique (a),
- une diamine (f) distincte de la diamine aliphatique (b).

Avantageusement, le nombre minimal d'atomes de carbone de cet acide amino-carboxylique et/ou de ce lactame (c) est strictement supérieur à 12.

La présente invention se rapporte enfin à une composition comprenant au moins un copolyamide semi-aromatique tel que défini ci-dessus.

### Exemples

Cinq copolyamides semi-aromatiques ont été préparés à partir des précurseurs (a), (b), (c) et (d) suivants :
- l'acide téréphtalique (a), noté T
- l'hexanediamine (b), notée 6
- l'acide N-heptyl-amino-11-undécanoïque (c), noté 18
- l'acide amino-11-undécanoïque (d), noté 11

Les teneurs molaires de chacun des motifs répétitifs de ces cinq copolyamides sont données dans le Tableau 1 ci-après.

Les copolyamides 1 à 5 sont synthétisés par polycondensation en masse dans un autoclave de 1I. Les précurseurs (a), (b), (c) et (d) sont introduits dans le réacteur, dans les teneurs molaires indiquées dans le Tableau 1, avec 25% en poids d'eau, 0,25% en poids d'acide acétique, 2000 ppm d'hypophosphite de sodium (catalyseur) et 10 000 ppm d'Irganox 1098 (antioxydant), les pourcentages pondéraux étant donnés par rapport au poids total des précurseurs (a), (b), (c) et (d). Le mélange est chauffé jusqu'à 262°C sous agitation et maintenu sous une pression autogène de 45 bars pendant 90 min. La pression est alors progressivement abaissée jusqu'à la pression atmosphérique tout en augmentant la température du mélange jusqu'à 310°C, sur une période de 60 min. La polymérisation est ensuite poursuivie sous balayage d'azote pendant 60 min supplémentaires. Le polymère est alors vidangé par une vanne de fond dans de l'eau, puis extrudé sous forme d'un jonc. Ce jonc est alors granulé.

**Tableau 1**

| Copolyamide | 11 | 18 | 6.T | Tg (°C) | Tf (°C) |
|---|---|---|---|---|---|
| Copolyamide 1 | 1 | 0 | 1,3 | 90 | 300 |
| Copolyamide 2 | 0,9 | 0,1 | 1,3 | 82 | 300 |
| Copolyamide 3 | 0,8 | 0,2 | 1,3 | 78 | 300 |
| Copolyamide 4 | 0,4 | 0,6 | 1,3 | 50 | 290 |
| Copolyamide 5 | 0 | 1 | 1,3 | 32 | 290 |

Les copolyamides 2 à 5 sont des copolyamides semi-aromatiques au sens de l'invention tandis que le copolyamide 1 est un copolyamide semi-aromatique conforme à l'enseignement du document EP 0 550 314.

La température de fusion et la température de transition vitreuse, notée Tg, ont été déterminées par Analyse Thermique Différentielle (c'est le terme français de la DSC) au moyen d'un DSC TA Instruments Q20 selon des cycles de chauffage et de refroidissement de 20°C à 350°C à 20°C/min, la Tf et la Tg étant mesurées sur la 2^{ème} chauffe.

Les valeurs de Tg et de Tf obtenues pour chacun des copolyamides 1 à 5 sont reportées dans le Tableau 1 ci-dessus.

La mesure de la température de transition vitreuse d'un polymère donne une première indication sur sa rigidité.

Ainsi, on observe que plus la teneur en motif 18 augmente, la teneur en motif semi-aromatique 6.T étant par ailleurs identique, plus la Tg diminue et moins le copolyamide semi-aromatique est rigide.

Ce résultat est d'autant plus intéressant que la Tf des copolyamides 2 à 5 n'est que très peu affectée et reste située autour de 300°C.

Il est également important de noter que, lors de la synthèse des copolyamides 2 à 5, on n'a observé aucune formation de points blancs dans la masse réactionnelle. Ainsi, on peut tout à fait envisager la synthèse d'un copolyamide 18/6.T doté d'une grande souplesse.

Pour affiner ces premières conclusions quant aux propriétés de souplesse des copolyamides semi-aromatiques selon l'invention, on a réalisé des éprouvettes de traction (conformes à la norme ISO 527) injectées sur micro-extrudeuse, numérotées 1, 2 et 3, respectivement à partir des copolyamides 1, 2 et 3 décrits dans le Tableau 1 ci-dessus.

On a ensuite réalisé des essais de traction selon la norme ISO 527 afin de déterminer, pour chaque séries d'éprouvettes 1 à 3, les valeurs de :
- module d'élasticité ou module de Young,
- contrainte à la rupture, et
- allongement à la rupture.

Ces valeurs sont reportées dans le Tableau 2 ci-dessous :

**Tableau 2**

| Eprouvettes | Copolyamides | Module de Young (MPa) | Contrainte à la rupture (MPa) | Allongement à la rupture (%) |
|---|---|---|---|---|
| Eprouvettes 1 | Copolyamide 1 | 1285 | 48 | 6 |
| Eprouvettes 2 | Copolyamide 2 | 1185 | 65 | 20 |
| Eprouvettes 3 | Copolyamide 3 | 1135 | 72 | 11 |

On observe là encore que plus la teneur en motif 18 augmente dans le copolyamide (la teneur en motif semi-aromatique étant bien entendu constante),
- plus la valeur du module de Young diminue, et
- plus la valeur de contrainte à la rupture augmente,
confirmant bien que le copolyamide semi-aromatique devient plus souple.

On notera en outre que les valeurs d'allongement à la rupture des copolyamides 2 et 3 sont bien améliorées par rapport à celles du copolyamide 1.

Pour vérifier que les propriétés de ténacité des copolyamides semi-aromatiques selon l'invention sont comparables à celles des copolyamides semi-aromatiques connus de l'Etat de la Technique, on a injecté les copolyamides 1 et 3 pour obtenir des barreaux, numérotés respectivement 1 et 3, conformes à la norme ISO 179. Ces barreaux 1 et 3 ont ensuite été conditionnés et maintenus deux semaines sous 50% d'humidité relative.

La moitié des barreaux 1 et 3 a été entaillée puis testée en choc pendulaire Charpy ISO 179-1eA avec un pendule de 7.5 Joules.

L'autre partie de ces barreaux 1 et 3, non entaillée, a ensuite été testée en choc pendulaire Charpy ISO 179-1eU avec un pendule de 7.5 Joules.

Dans les ceux cas, l'énergie absorbée par les barreaux 1 et 3, exprimée en kJ/m², a été mesurée à 23°C, et les valeurs correspondantes ont été reportées dans le Tableau 3 ci-dessous.

**Tableau 3**

| Barreaux | Copolyamides | Choc Charpy non entaillé (kJ/m²) | Choc Charpy entaillé (kJ/m²) |
|---|---|---|---|
| Barreaux 1 | Copolyamide 1 | 3 | 1 |
| Barreaux 3 | Copolyamide 3 | 7 | 3 |

On observe que les valeurs de ténacité des barreaux 3 sont tout à fait comparables, voire même légèrement améliorées par rapport, à celles des barreaux 1 obtenus à partir de copolyamides tels que ceux décrits dans le document EP 0 550 314.

Grâce aux copolyamides selon l'invention, on peut choisir de manière très précise la teneur en acide amino-carboxylique et/ou en lactame (c) comprenant une chaîne principale et au moins une ramification alkyle linéaire ou ramifiée, pour obtenir un copolyamide semi-aromatique présentant un point de fusion supérieur ou égal à 200°C, des propriétés mécaniques comparables et des propriétés de souplesse améliorées par rapport à celles des copolyamides de l'art antérieur et ce, sans limite de faisabilité industrielle.

## Revendications

1. Copolyamide comprenant les motifs issus de la réaction de polycondensation des précurseurs suivants :
- l'acide téréphtalique (a),
- une diamine aliphatique (b), de préférence linéaire, comprenant x atomes de carbone, x étant un nombre entier compris entre 6 et 22, et
- un acide amino-carboxylique et/ou un lactame (c) comprenant une chaîne principale et au moins une ramification alkyle linéaire ou ramifiée, le nombre total d'atomes de carbone de l'acide amino-carboxylique et/ou du lactame (c) étant compris entre 12 et 36,
de manière optionnelle,
- un acide amino-carboxylique et/ou un lactame (d) distinct de (c),
- un acide dicarboxylique (e) distinct de l'acide téréphtalique (a),
- une diamine (f) distincte de la diamine aliphatique (b).

2. Copolyamide selon la revendication 1, **caractérisé en ce que** l'acide amino-carboxylique et/ou le lactame (c) comprend un nombre total d'atomes de carbone compris entre 15 et 30.

3. Copolyamide selon la revendication 2, **caractérisé en ce que** l'acide amino-carboxylique et/ou le lactame (c) comprend un nombre total d'atomes de carbone compris entre 18 et 24.

4. Copolyamide selon l'une quelconque des revendications 1 à 3, **caractérisé en ce que** la chaîne principale de l'acide amino-carboxylique et/ou du lactame (c) comprend entre 6 et 18 atomes de carbone.

5. Copolyamide selon la revendication 4, **caractérisé en ce que** la chaîne principale de l'acide amino-carboxylique et/ou du lactame (c) comprend entre 10 et 12 atomes de carbone

6. Copolyamide selon l'une quelconque des revendications 1 à 5, **caractérisé en ce que** la ramification alkyle de l'acide amino-carboxylique et/ou du lactame (c) comprend au moins 5 atomes de carbone.

7. Copolyamide selon la revendication 6, **caractérisé en ce que** la ramification alkyle de l'acide amino-carboxylique et/ou du lactame (c) comprend au moins 7 atomes de carbones

8. Copolyamide selon l'une quelconque des revendications 1 à 7, **caractérisé en ce que** l'acide amino-carboxylique (c) est choisi parmi l'acide N-heptyl-amino-11-undécanoïque (18), l'acide N-heptyl-amino-12-dodécanoïque (19), l'acide N-dodécyl-amino-11-undécanoïque (23), l'acide N-dodécyl-amino-12-dodécanoïque (24), l'acide N-octadécyl-amino-11-undécanoïque (29) et l'acide N-octadécyl-amino-12-dodécanoïque (30).

9. Copolyamide selon l'une quelconque des revendications 1 à 8, **caractérisé en ce que** la diamine aliphatique (b) comprend entre 6 et 18 atomes de carbone.

10. Copolyamide selon la revendication 9. **caractérisé en ce que** la diamine aliphatique (b) est l'hexanediamine ou la décanediamine

11. Copolyamide selon l'une quelconque des revendications 1 à 10, **caractérisé en ce que** l'acide amino-carboxylique et/ou le lactame (d) comprend un nombre d'atomes de carbone inférieur ou égal à 12.

12. Copolyamide selon la revendication 11, **caractérisé en ce que** l'acide amino-carboxylique (d) est choisi parmi l'acide amino-9-nonanoïque, l'acide amino-10-undécanoïque, l'acide amino-11-undécanoïque et l'acide amino-12-dodécanoïque, préférentiellement l'acide amino-11-undécanoïque.

13. Copolyamide selon la revendication 11 ou 12, **caractérisé en ce que** le lactame (d) est choisi parmi le caprolactame, le décanolactame, l'undécanolactame et le lauryllactame.

14. Copolyamide selon la revendication 13, **caractérisé en ce que** le lactame (d) est le lauryllactame

15. Copolyamide selon l'une quelconque des revendications 1 à 14, **caractérisé en ce qu'**il comprend :
- entre 35 et 85% en moles d'acide téréphtalique (a) et de diamine aliphatique (b), et
- entre 15 et 65% en moles d'acide aminocarboxylique et/ou de lactame (c).

16. Copolyamide selon l'une quelconque des revendications 1 à 14, **caractérisé en ce qu'**il comprend :
- entre 35 et 85% en moles d'acide téréphtalique (a) et de diamine aliphatique (b), et
- entre 15 et 65% en moles d'acide aminocarboxylique et/ou de lactame (c) et d'acide aminocarboxylique et/ou de lactame (d).

17. Copolyamide selon l'une quelconque des revendications 1 à 14, **caractérisé en ce qu'**il comprend :
- entre 35 et 85% en moles d'acide téréphtalique (a),
- entre 15 et 65% en moles d'acide aminocarboxylique et/ou de lactame (c) et d'acide dicarboxylique (e),
la teneur molaire en diamine aliphatique (b) étant égale à la somme des teneurs molaires en acide téréphtalique (a) et en acide dicarboxylique (e).

18. Copolyamide selon l'une quelconque des revendications 1 à 14, **caractérisé en ce qu'**il comprend :
- entre 35 et 85% en moles d'acide téréphtalique (a),
- entre 15 et 65% en moles d'acide aminocarboxylique et/ou de lactame (c), d'acide aminocarboxylique et/ou de lactame (d) et d'acide dicarboxylique (e),
la teneur molaire en diamine aliphatique (b) étant égale à la somme des teneurs molaires en acide téréphtalique (a) et en acide dicarboxylique (e).

19. Copolyamide selon l'une quelconque des revendications 1 à 14, **caractérise en ce qu'**il comprend :
- entre 35 et 85% en moles d'acide téréphtalique (a),
- entre 15 et 65% en moles d'acide aminocarboxylique ou de lactame (c), d'acide aminocarboxylique ou de lactame (d), d'acide dicarboxylique (e) et de diamine (f),
la teneur molaire en diamine aliphatique (b) étant supérieure ou égale à la teneur molaire en acide téréphtalique (a) et la somme des teneurs molaires en diamine aliphatique (b) et en diamine (f) étant égale à la somme des teneurs molaires en acide téréphtalique (a) et en acide dicarboxylique (e).

20. Copolyamide selon l'une quelconque des revendications 1 à 19, **caractérisé en ce qu'**il répond à la formule 18/6.T, 18/10.T, 11/18/6.T, 11/18/10.T, 11/19/10.T, 12/19/10.T, 12/18/6.T, 12/18/10.T, 11/23/6.T, 11/23/10.T, 12/23/6.T, 12/23/10.T, 11/24/6.T, 11/24/10.T, 12/24/6.T, 12/24/10.T, 11/29/6.T, 11/29/10.T, 12/29/6.T, 12/29/10.T, 11/30/6.T, 11/30/10.T, 12/30/6.T ou 12/30/10.T, 18 désignant l'acide N-heptyl-amino-11-undécanoïque, 19 désignant l'acide N-heptyl-amino-12-dodécanoïque, 23 désignant l'acide N-dodécyl-amino-11-undécanoïque, 24 désignant l'acide N-dodécyl-amino-12-dodécanoïque, 29 désignant l'acide N-octadécyl-amino-11-undécanoïque et 30 désignant l'acide N-octadécyl-amino-12-dodécanoïque.

21. Procédé de préparation du copolyamide tel que défini à l'une quelconque des revendications 1 à 20, **caractérisé en ce qu'**il comprend une étape de polycondensation des précurseurs (a), (b), (c) et, de manière optionnelle, (d), (e) et (f) tels que définis à la revendication 1.

22. Composition comprenant au moins un copolyamide tel que défini à l'une quelconque des revendications 1 à 20.

## Patentansprüche

1. Copolyamid, umfassend die Einheiten, die sich aus der Polykondensationsreaktion der folgenden Vorläufer ergeben:
- Terephthalsäure (a),
- eines vorzugsweise linearen aliphatischen Diamins (b) mit x Kohlenstoffatomen, wobei x für eine ganze Zahl zwischen 6 und 22 steht, und
- einer Aminocarbonsäure und/oder eines Lactams (c) mit einer Hauptkette und mindestens einer linearen oder verzweigten Alkylverzweigung, wobei die Gesamtzahl der Kohlenstoffatome der Aminocarbonsäure und/oder des Lactams (c) zwischen 12 und 36 liegt,
gegebenenfalls
- einer Aminocarbonsäure und/oder eines Lactams (d), die bzw. das von (c) verschieden ist,
- einer Dicarbonsäure (e), die von der Terephthalsäure (a) verschieden ist,
- eines Diamins (f), das von dem aliphatischen Diamin (b) verschieden ist.

2. Copolyamid nach Anspruch 1, **dadurch gekennzeichnet, dass** die Aminocarbonsäure und/oder das Lactam (c) eine Gesamtzahl von Kohlenstoffatomen zwischen 15 und 30 umfassen.

3. Copolyamid nach Anspruch 2, **dadurch gekennzeichnet, dass** die Aminocarbonsäure und/oder das Lactam (c) eine Gesamtzahl von Kohlenstoffatomen zwischen 18 und 24 umfassen.

4. Copolyamid nach einem der Ansprüche 1 bis 3, **dadurch gekennzeichnet, dass** die Hauptkette der Aminocarbonsäure und/oder des Lactams (c) zwischen 6 und 18 Kohlenstoffatome umfasst.

5. Copolyamid nach Anspruch 4, **dadurch gekennzeichnet, dass** die Hauptkette der Aminocarbonsäure und/oder des Lactams (c) zwischen 10 und 12 Kohlenstoffatome umfasst.

6. Copolyamid nach einem der Ansprüche 1 bis 5, **dadurch gekennzeichnet, dass** die Alkylverzweigung der Aminocarbonsäure und/oder des Lactams (c) mindestens 5 Kohlenstoffatome umfasst.

7. Copolyamid nach Anspruch 6, **dadurch gekennzeichnet, dass** die Alkylverzweigung der Aminocarbonsäure und/oder des Lactams (c) mindestens 7 Kohlenstoffatome umfasst.

8. Copolyamid nach einem der Ansprüche 1 bis 7, **dadurch gekennzeichnet, dass** die Aminocarbonsäure (c) aus N-Heptyl-11-aminoundecansäure (18), N-Heptyl-12-aminododecansäure (19), N-Dodecyl-11-aminoundecansäure (23), N-Dodecyl-12-aminododecan-säure (24), N-Octadecyl-11-aminoundecansäure (29) und N-Octadecyl-12-aminododecansäure (30) ausgewählt ist.

9. Copolyamid nach einem der Ansprüche 1 bis 8, **dadurch gekennzeichnet, dass** das aliphatische Diamin (b) zwischen 6 und 18 Kohlenstoffatome umfasst.

10. Copolyamid nach Anspruch 9, **dadurch gekennzeichnet, dass** es sich bei dem aliphatischen Diamin (d) um Hexandiamin oder Decandiamin handelt.

11. Copolyamid nach einem der Ansprüche 1 bis 10, **dadurch gekennzeichnet, dass** die Aminocarbonsäure und/oder das Lactam (d) eine Zahl von Kohlenstoffatomen kleiner gleich 12 umfasst.

12. Copolyamid nach Anspruch 11, **dadurch gekennzeichnet, dass** die Aminocarbonsäure (d) aus 9-Amino-nonansäure, 10-Aminodecansäure, 11-Aminoundecansäure und 12-Aminododecansäure, vorzugsweise 11-Aminoundecansäure, ausgewählt ist.

13. Copolyamid nach Anspruch 11 oder 12, **dadurch gekennzeichnet, dass** das Lactam (d) aus Caprolactam, Decanolactam, Undecanolactam und Lauryllactam ausgewählt ist.

14. Copolyamid nach Anspruch 13, **dadurch gekennzeichnet, dass** es sich bei dem Lactam (d) um Lauryllactam handelt.

15. Copolyamid nach einem der Ansprüche 1 bis 14, **dadurch gekennzeichnet, dass** es
- zwischen 35 und 85 Mol-% Terephthalsäure (a) und aliphatisches Diamin (b) und
- zwischen 15 und 65 Mol-% Aminocarbonsäure und/oder Lactam (c)
umfasst.

16. Copolyamid nach einem der Ansprüche 1 bis 14, **dadurch gekennzeichnet, dass** es
- zwischen 35 und 85 Mol-% Terephthalsäure (a) und aliphatisches Diamin (b) und
- zwischen 15 und 65 Mol-% Aminocarbonsäure und/oder Lactam (c) und Aminocarbonsäure und/oder Lactam (d)
umfasst.

17. Copolyamid nach einem der Ansprüche 1 bis 14, **dadurch gekennzeichnet, dass** es
- zwischen 35 und 85 Mol-% Terephthalsäure (a),
- zwischen 15 und 65 Mol-% Aminocarbonsäure und/oder Lactam (c) und Dicarbonsäure (e)
umfasst, wobei der molare Gehalt an aliphatischem Diamin (b) gleich der Summe der molaren Gehalte an Terephthalsäure (a) und Dicarbonsäure (e) ist.

18. Copolyamid nach einem der Ansprüche 1 bis 14, **dadurch gekennzeichnet, dass** es
- zwischen 35 und 85 Mol-% Terephthalsäure (a),
- zwischen 15 und 65 Mol-% Aminocarbonsäure und/oder Lactam (c), Aminocarbonsäure und/oder Lactam (d) und Dicarbonsäure (e)
umfasst, wobei der molare Gehalt an aliphatischem Diamin (b) gleich der Summe der molaren Gehalte an Terephthalsäure (a) und Dicarbonsäure (e) ist.

19. Copolyamid nach einem der Ansprüche 1 bis 14, **dadurch gekennzeichnet, dass** es
- zwischen 35 und 85 Mol-% Terephthalsäure (a),
- zwischen 15 und 65 Mol-% Aminocarbonsäure und/oder Lactam (c), Aminocarbonsäure und/oder Lactam (d), Dicarbonsäure (e) und Diamin (f)
umfasst, wobei der molare Gehalt an aliphatischem Diamin (b) größer gleich dem molaren Gehalt an Terephthalsäure (a) ist und die Summe der molaren Gehalte an aliphatischem Diamin (b) und Diamin (f) gleich der Summe der molaren Gehalte an Terephthalsäure (a) und Dicarbonsäure (e) ist.

20. Copolyamid nach einem der Ansprüche 1 bis 19, **dadurch gekennzeichnet, dass** es der Formel 18/6.T, 18/10.T, 11/18/6.T, 11/18/10.T, 11/19/10.T, 12/19/10.T, 12/18/6.T, 12/18/10.T, 11/23/6.T, 11/23/10.T, 12/23/6.T, 12/23/10.T, 11/24/6.T, 11/24/10.T, 12/24/6.T, 12/24/10.T, 11/29/6.T, 11/29/10.T, 12/29/6.T, 12/29/10.T, 11/30/6.T, 11/30/10.T, 12/30/6.T oder 12/30/10.T entspricht, wobei 18 für N-Heptyl-11-aminoundecansäure steht, 19 für N-Heptyl-12-aminododecansäure steht, 23 für N-Dodecyl-11-aminoundecansäure steht, 24 für N-Dodecyl-12-aminododecansäure steht, 29 für N-Octadecyl-11-aminoundecansäure steht und 30 für N-Octadecyl-12-aminododecansäure steht.

21. Verfahren zur Herstellung des Copolyamids gemäß einem der Ansprüche 1 bis 20, **dadurch gekennzeichnet, dass** es einen Schritt der Polykondensation der Vorläufer (a), (b), (c) und gegebenenfalls (d), (e) und (f) gemäß Anspruch 1 umfasst.

22. Zusammensetzung, umfassend mindestens ein Copoly-amid gemäß einem der Ansprüche 1 bis 20.

## Claims

1. Copolyamide comprising the units resulting from the polycondensation reaction of the following precursors:
- terephthalic acid (a),
- an aliphatic diamine (b), which is preferably linear, comprising x carbon atoms, x being an integer between 6 and 22, and
- an aminocarboxylic acid and/or a lactam (c) comprising a main chain and at least one linear or branched alkyl branching, the total number of carbon atoms of the aminocarboxylic acid and/or of the lactam (c) being between 12 and 36, optionally,
- an aminocarboxylic acid and/or a lactam (d) different from (c),
- a dicarboxylic acid (e) different from the terephthalic acid (a),
- a diamine (f) different from the aliphatic diamine (b).

2. Copolyamide according to Claim 1, **characterized in that** the aminocarboxylic acid and/or the lactam (c) comprises a total number of carbon atoms between 15 and 30.

3. Copolyamide according to Claim 2, **characterized in that** the aminocarboxylic acid and/or the lactam (c) comprises a total number of carbon atoms between 18 and 24.

4. Copolyamide according to any one of Claims 1 to 3, **characterized in that** the main chain of the aminocarboxylic acid and/or of the lactam (c) comprises between 6 and 18 carbon atoms.

5. Copolyamide according to Claim 4, **characterized in that** the main chain of the aminocarboxylic acid and/or of the lactam (c) comprises between 10 and 12 carbon atoms.

6. Copolyamide according to any one of Claims 1 to 5, **characterized in that** the alkyl branching of the aminocarboxylic acid and/or of the lactam (c) comprises at least 5 carbon atoms.

7. Copolyamide according to Claim 6, **characterized in that** the alkyl branching of the aminocarboxylic acid and/or of the lactam (c) comprises at least 7 carbon atoms.

8. Copolyamide according to any one of Claims 1 to 7, **characterized in that** the aminocarboxylic acid (c) is chosen from N-heptyl-11-aminoundecanoic acid (18), N-heptyl-12-aminododecanoic acid (19), N-dodecyl-11-aminoundecanoic acid (23), N-dodecyl-12-aminododecanoic acid (24), N-octadecyl-11-aminoundecanoic acid (29) and N-octadecyl-12-aminododecanoic acid (30).

9. Copolyamide according to any one of Claims 1 to 8, **characterized in that** the aliphatic diamine (b) comprises between 6 and 18 carbon atoms.

10. Copolyamide according to Claim 9, **characterized in that** the aliphatic diamine (b) is hexanediamine or decanediamine.

11. Copolyamide according to any one of Claims 1 to 10, **characterized in that** the aminocarboxylic acid and/or the lactam (d) comprises a number of carbon atoms less than or equal to 12.

12. Copolyamide according to Claim 11, **characterized in that** the aminocarboxylic acid (d) is chosen from 9-aminononanoic acid, 10-aminodecanoic acid, 11-aminoundecanoic acid and 12-aminododecanoic acid, preferably 11-aminoundecanoic acid.

13. Copolyamide according to Claim 11 or 12, **characterized in that** the lactam (d) is chosen from caprolactam, decanolactam, undecanolactam and lauryl lactam.

14. Copolyamide according to Claim 13, **characterized in that** the lactam (d) is lauryl lactam.

15. Copolyamide according to any one of Claims 1 to 14, **characterized in that** it comprises:
- between 35 and 85 mol% of terephthalic acid (a) and of aliphatic diamine (b), and
- between 15 and 65 mol% of aminocarboxylic acid and/or of lactam (c).

16. Copolyamide according to any one of Claims 1 to 14, **characterized in that** it comprises:
- between 35 and 85 mol% of terephthalic acid (a) and of aliphatic diamine (b), and
- between 15 and 65 mol% of aminocarboxylic acid and/or of lactam (c) and of aminocarboxylic acid and/or of lactam (d).

17. Copolyamide according to any one of Claims 1 to 14, **characterized in that** it comprises:
- between 35 and 85 mol% of terephthalic acid (a),
- between 15 and 65 mol% of aminocarboxylic acid and/or of lactam (c) and of dicarboxylic acid (e),
the molar content of aliphatic diamine (b) being equal to the sum of the molar contents of terephthalic acid (a) and of dicarboxylic acid (e).

18. Copolyamide according to any one of Claims 1 to 14, **characterized in that** it comprises:
- between 35 and 85 mol% of terephthalic acid (a),
- between 15 and 65 mol% of aminocarboxylic acid and/or of lactam (c), of aminocarboxylic acid and/or of lactam (d) and of dicarboxylic acid (e),
the molar content of aliphatic diamine (b) being equal to the sum of the molar contents of terephthalic acid (a) and of dicarboxylic acid (e).

19. Copolyamide according to any one of Claims 1 to 14, **characterized in that** it comprises:
- between 35 and 85 mol% of terephthalic acid (a),
- between 15 and 65 mol% of aminocarboxylic acid and/or of lactam (c), of aminocarboxylic acid or of lactam (d), of dicarboxylic acid (e) and of diamine (f),
the molar content of aliphatic diamine (b) being greater than or equal to the molar content of terephthalic acid (a) and the sum of the molar contents of aliphatic diamine (b) and of diamine (f) being equal to the sum of the molar contents of terephthalic acid (a) and of dicarboxylic acid (e).

20. Copolyamide according to any one of Claims 1 to 19, **characterized in that** it corresponds to the formula: 18/6,T, 18/10,T, 11/18/6,T, 11/18/10,T, 11/19/10,T, 12/19/10,T, 12/18/6,T, 12/18/10,T, 11/23/6,T, 11/23/10,T, 12/23/6,T, 12/23/10,T, 11/24/6,T, 11/24/10,T, 12/24/6,T, 12/24/10,T, 11/29/6,T, 11/29/10,T, 12/29/6,T, 12/29/10,T, 11/30/6,T, 11/30/10,T, 12/30/6,T or 12/30/10,T, 18 denoting N-heptyl-11-aminoundecanoic acid, 19 denoting N-heptyl-12-aminododecanoic acid, 23 denoting N-dodecyl-11-aminoundecanoic acid, 24 denoting N-dodecyl-12-aminododecanoic acid, 29 denoting N-octadecyl-11-aminoundecanoic acid and 30 denoting N-octadecyl-12-aminododecanoic acid.

21. Process for preparing the copolyamide as defined in any one of Claims 1 to 20, **characterized in that** it comprises a step of polycondensation of the precursors (a), (b), (c) and, optionally, (d), (e) and (f) as defined in Claim 1.

22. Composition comprising at least one copolyamide as defined in any one of Claims 1 to 20.
